# EUROPEAN PATENT APPLICATION

(11) **EP 3 379 395 A1**
(43) Date of publication of application: **26.09.2018**
(21) Application number: 18163732.3
(22) Date of filing: 23.03.2018
(51) Int. Cl.: G06F 3/041, G06F 3/0488

(54) **TOUCH INPUT DEVICE AND CONTROL METHOD THEREOF**

(30) Priority: 23.03.2017 KR 20170036908
(71) Applicant: Hideep Inc., Seongnam-si, Gyeonggi-do 13493 (KR)
(72) Inventor: Lee, Young Min, Gyeonggi-do 13493 (KR); Lee, Sein, Gyeonggi-do 13493 (KR)
(74) Representative: Patronus IP Patent- und Rechtsanwälte

(57) **Abstract**

A control method of a touch input device capable of sensing a pressure of a touch may be provided. The control method includes: a sensing step of sensing a magnitude of the pressure of the touch input to a surface of the touch input device in a state where a screen of the touch input device is turned off; an information displaying step of displaying predetermined information on the screen when the sensed magnitude of the pressure is equal to or greater than a threshold value; and a screen control step of controlling a luminosity of the screen or/and a size of the information on the basis of the sensed magnitude of the pressure in a state where the information is displayed on the screen.

## Description

### BACKGROUND

### Field

The present disclosure relates to a touch input device and a control method thereof and more particularly to a touch input device capable of improving user operability of devices by controlling a screen thereof in response to the pressure of a touch input to the surface of the touch input device capable of sensing the touch, touch position and touch pressure, and a method of controlling the touch input device.

### Description of the Related Art

Various types of input devices are being used to operate a computing system such as smartphones, tablet PCs, laptop computers, navigation devices, KIOSKs, etc.

A touch screen among various types of input devices is being used increasingly in the computing system due to its easy and simple operability. Further, the laptop computer uses a touch panel, and thus, controls the screen displayed on the monitor or program execution. The use of this touch sensing means makes a user interface simple.

There used to be an example in which an intuitive interface using a touch sensing means is used to turn on a turned-off screen (or deactivated screen). A touch sensor senses an operation that a user touches the window surface on the turned-off screen once and then touches again within a certain period of time. Then, the touch sensor transmits the sensed operation to a processor, and the processor activates a display thereby turning on the turned-off screen.

Such a control method has an inconvenience that the user must touch at least twice and that the turned-off screen is not turned on unless the at least two touches occur within a certain period of time.

Further, since the turned-off screen is turned on by a common touch, the turned-off screen may be frequently turned on even by user's unintended touch.

### SUMMARY

One embodiment is a control method of a touch input device capable of sensing a pressure of a touch may be provided. The control method includes: a sensing step of sensing a magnitude of the pressure of the touch input to a surface of the touch input device in a state where a screen of the touch input device is turned off; an information displaying step of displaying predetermined information on the screen when the sensed magnitude of the pressure is equal to or greater than a threshold value; and a screen control step of controlling a luminosity of the screen on the basis of the sensed magnitude of the pressure in a state where the information is displayed on the screen.

In the screen control step, when the sensed magnitude of the pressure is equal to or greater than the threshold value, the luminosity of the screen is controlled.

In the screen control step, after the sensed magnitude of the pressure reaches a maximum pressure value, the luminosity of the screen is increased on the basis of a time period for which the maximum pressure value is maintained.

In the screen control step, not only the luminosity of the screen but also the size of the information are controlled on the basis of the sensed magnitude of the pressure.

Another embodiment is a control method of a touch input device capable of sensing a pressure of a touch. The control method includes: a sensing step of sensing a magnitude of the pressure of the touch input to a surface of the touch input device in a state where a screen of the touch input device is turned off; an information displaying step of displaying predetermined information on the screen when the sensed magnitude of the pressure is equal to or greater than a threshold value; and a screen control step of controlling a size of the information on the basis of the sensed magnitude of the pressure in a state where the information is displayed on the screen.

In the screen control step, when the sensed magnitude of the pressure is equal to or greater than the threshold value, the size of the information is controlled.

The embodiments further comprises, in the state where the information is displayed on the screen, turning off the screen when a position of the touch is not sensed.

The embodiments further comprises, in the state where the information is displayed on the screen, turning off the screen after a predetermined period of time when a position of the touch is not sensed.

The predetermined period of time is determined based on the pressure magnitude sensed immediately before a release operation time period.

In the sensing step of the embodiments, a type of the touch is sensed and when the touch is a multi-touch, a magnitude of a pressure of the multi-touch is sensed, and wherein, in the information displaying step, when a largest magnitude among the magnitudes of the pressures of the multi-touch or a value obtained by summing the magnitudes of the pressures of the multi-touch is equal to or greater than the threshold value, the information or information different from the information is displayed on the screen.

In the sensing step of the embodiments, a position of the touch is sensed, and wherein, in the information displaying step, the information to be displayed is displayed on the screen in such a way as not to overlap the position of the touch.

Further another embodiment is a touch input device capable of sensing a pressure of a touch. The touch input device includes: a display; a pressure sensing unit which outputs a signal corresponding to the pressure of the touch input to a surface of the display, in a state where a screen of the display is turned off; and a control unit which calculates a magnitude of the pressure of the touch on the basis of the signal output from the pressure sensing unit, displays predetermined information on the screen when the magnitude of the pressure is equal to or greater than a threshold value, and controls a luminosity of the screen on the basis of the magnitude of the pressure.

The control unit controls the luminosity of the screen when the sensed magnitude of the pressure exceeds the threshold value.

After the sensed magnitude of the pressure reaches a maximum pressure value, the control unit increases the luminosity of the screen on the basis of a time period for which the maximum pressure value is maintained.

The control unit controls not only the luminosity of the screen but also the size of the information on the basis of the sensed magnitude of the pressure.

Yet another embodiment is a touch input device capable of sensing a pressure of a touch. The touch input device includes: a display; a pressure sensing unit which outputs a signal corresponding to the pressure of the touch input to a surface of the display, in a state where a screen of the display is turned off; a control unit which calculates a magnitude of the pressure of the touch on the basis of the signal output from the pressure sensing unit, displays predetermined information on the screen when the magnitude of the pressure is equal to or greater than a threshold value, and controls a size of the information on the basis of the magnitude of the pressure.

The control unit of the embodiments controls the size of the information when the sensed magnitude of the pressure exceeds the threshold value.

In the state where the information is displayed on the screen, the control unit of the embodiments turns off the screen when a position of the touch is not sensed.

In the state where the information is displayed on the screen, the control unit of the embodiments turns off the screen after a predetermined period of time when a position of the touch is not sensed.

The predetermined period of time is determined based on the pressure magnitude sensed immediately before a release operation time period.

The control unit of the embodiments senses a type of the touch, wherein, when the touch is a multi-touch, the control unit senses a magnitude of a pressure of the multi-touch, and wherein, when a largest magnitude among the magnitudes of the pressures of the multi-touch or a value obtained by summing the magnitudes of the pressures of the multi-touch is equal to or greater than the threshold value, the control unit displays the information or information different from the information on the screen.

The control unit of the embodiments senses a position of the touch, and wherein the control unit displays the information to be displayed on the screen in such a way as not to overlap the position of the touch.

### BRIEF DESCRIPTION OF THE DRAWINGS

Fig. 1 is a functional block diagram of a touch input device according to the embodiment of the present invention;
Fig. 2 is a front view of the touch input device 100 according to the embodiment of the present invention;
Figs. 3 to 6 are views for describing a control method of the touch input device 100 according to the embodiment of the present invention;
Fig. 7 is a view for describing a control method of the touch input device 100 according to another embodiment of the present invention;
Fig. 8 is a view for describing a control method of the touch input device 100 according to further another embodiment of the present invention; and
Fig. 9 is a flowchart for describing the control method of the touch input device 100 according to the embodiment of the present invention.

### DETAILED DESCRIPTION

The following detailed description of the present invention shows a specified embodiment of the present invention and will be provided with reference to the accompanying drawings. The embodiment will be described in enough detail that those skilled in the art are able to embody the present invention. It should be understood that various embodiments of the present invention are different from each other and need not be mutually exclusive. For example, a specific shape, structure and properties, which are described in this disclosure, may be implemented in other embodiments without departing from the spirit and scope of the present invention with respect to one embodiment. Also, it should be noted that positions or placements of individual components within each disclosed embodiment may be changed without departing from the spirit and scope of the present invention. Therefore, the following detailed description is not intended to be limited. If adequately described, the scope of the present invention is limited only by the appended claims of the present invention as well as all equivalents thereto. Similar reference numerals in the drawings designate the same or similar functions in many aspects.

Hereinafter, a device equipped with a touch screen according to an exemplary embodiment of the present invention and a control method thereof will be described with reference to the accompanying drawings. The device described in this specification may include a cellular phone, a smartphone, a laptop computer, a digital broadcast terminal device, a personal digital assistant (PDA), a navigation system, a slate PC, a tablet PC, an Ultrabook, a wearable device, KIOSK, etc., which are equipped with a touch screen.

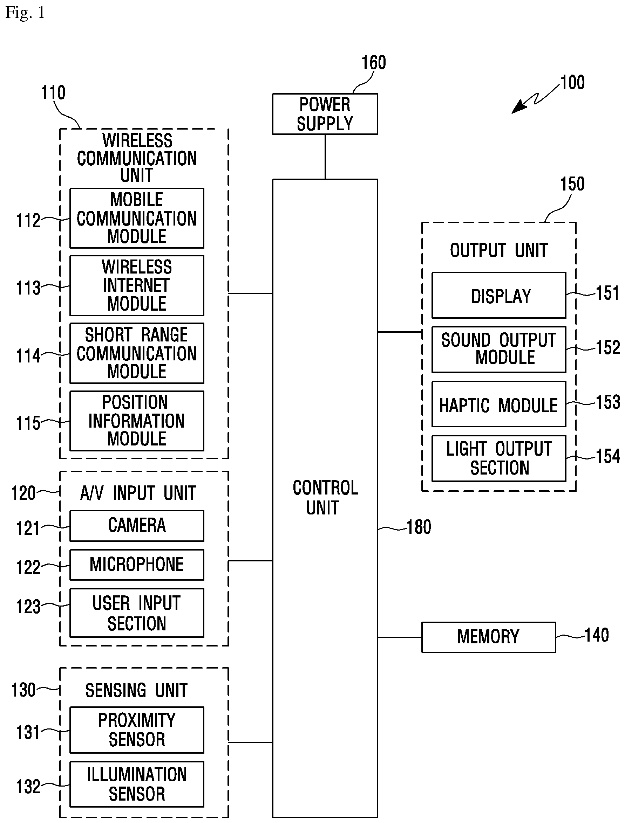

Fig. 1 is a functional block diagram of a touch input device 100 according to an embodiment of the present invention and shows an example in which the touch input device 100 according to the embodiment of the present invention is applied to a smartphone.

The touch input device 100 may include a wireless communication unit 110, an input unit 120, a sensing unit 130, an output unit 150, a memory 140, a control unit 180, and a power supply 160.

The components shown in Fig. 1 are not indispensable in the implementation of the touch input device 100. The touch input device described in the present specification may have a larger or smaller number of the components than that of the components described above.

The wireless communication unit 110 may include at least one module enabling wireless communication between the touch input device 100 and a wireless communication system, between the touch input device 100 and another touch input device, or between the touch input device 100 and an external server.

The wireless communication unit 110 may include at least one module which connects the touch input device 100 to at least one network. The wireless communication unit 110 may include at least one of a mobile communication module 112, a wireless internet module 113, a short-range communication module 114, and a position information module 115.

The mobile communication module 112 transmits/receives a radio signal to and from at least one of a base station, an external terminal, and a server in a mobile communication network constructed in accordance with communication methods or technical standards for mobile communication. The wireless internet module 113 refers to a module for wireless internet access and may be built in or externally attached to the touch input device 100.

The wireless internet module 113 transmits/receives a radio signal in a communication network based on wireless internet technologies such as Wireless LAN (WLAN), Wireless-Fidelity (Wi-Fi), etc.

The short-range communication module 114 supports short range communication by using Bluetooth™, Radio Frequency Identification (RFID), Infrared Data Association (IrDA), ZigBee, Near Field Communication (NFC), etc.

The position information module 115 obtains the position (or current position) of the device. A global positioning system (GPS) module or a wireless fidelity (Wi-Fi) module can be taken as a representative example of the position information module 115. However, the position information module 115 is not limited to a module for directly calculating or obtaining the position of the device.

The input unit 120 may include a video input section or a camera 121 for inputting a video signal, an audio input section or a microphone 122 for inputting an audio signal, and a user input section 123 (e.g., a touch key, a mechanical key, etc.) for receiving information of a user. The voice data or image data collected by the input unit 120 may be analyzed and processed as a control instruction of the user.

The camera 121 processes image frames of still images or videos, etc., obtained in a video call mode or in a photographing mode by an image sensor. The processed image frames may be displayed on a display 151 or may be stored in the memory 140.

The microphone 122 processes an external sound signal as an electrical voice data. The processed voice data can be variously used according to the function (or application program being executed) by the touch input device 100.

The user input section 123 receives information from the user. When information is received through the user input section 123, the control unit 180 can control the operation of the touch input device 100 in correspondence to the received information. The user input section 123 may include a mechanical input means (or a mechanical key, for example, a button disposed on the front, rear or side surface of the touch input device 100, a dome switch, a jog wheel, a jog switch, etc.) and a touch-type input means.

The touch-type input means may include a virtual key, a soft key, or a visual key displayed on the touch screen of the display 151 through software processing, or may include a touch key disposed on a portion other than the touch screen. Meanwhile, the virtual key or the visual key can be displayed on the touch screen in various forms. For example, the virtual key or the visual key may consist of a graphic, a text, an icon, a video, or a combination thereof.

The sensing unit 130 may include at least one sensor for sensing at least one of information on the inside of the device, information on ambient environment surrounding the device, and user information. For example, the sensing unit 130 may include a touch sensor, a force sensor, an acceleration sensor, a magnetic sensor, a G-sensor, a gyroscope sensor, and a motion sensor as well as a proximity sensor 131 and an illumination sensor 132.

The output unit 150 generates an output related to a visual sense, an auditory sense, or a tactile sense, etc. The output unit 150 may include at least one of the display 151, a sound output section 152, a haptic module 153, and a light output section 154.

The display 151 may include, for example, a liquid crystal display (LCD), a thin film transistor-liquid crystal display (TFT LCD), an organic light-emitting diode (OLED), a flexible display, a 3D display, an e-ink display, etc.

The display 151 can implement the touch screen by forming a mutual layer structure with the touch sensor or force sensor or by being integrally formed with the touch sensor or force sensor. The touch screen can function as the user input section 123 providing an input interface between the touch input device 100 and the user and can provide an output interface between the touch input device 100 and the user as well.

In order that the display 151 can receive a control command in a touch manner, the display 151 may include the touch sensor which senses a touch on the display 151. Through this, when a touch occurs on the display 151, the touch sensor senses the touch and the control unit 180 may generate a control command corresponding to the touch on the basis of the touch. The content input in a touch manner may be characters or numbers, instructions in various modes, or a menu item that can be designated. Meanwhile, the touch sensor may be formed in the form of a film having a touch pattern and may be disposed between a cover window and a display panel, or may be composed of a metal wire directly patterned on the back side of the cover window.

According to the embodiment of the present invention, the touch sensor included in the display 151 may include a touch panel and a controller receiving a signal output from the touch panel. The controller can transmit the signal output from the touch panel to the control unit 180. Alternatively, the controller can convert the signal output from the touch panel into a digital data and transmit the converted digital data to the control unit 180. The control unit 180 can determine whether or not the touch has occurred and the position of the touch on the basis of the signal or data provided from the controller.

In order that the display 151 can receive a control command in a touch manner, the display 151 may include a pressure sensing unit which senses a pressure (or force) of the touch on the display 151. Through this, when a touch occurs on the display 151, the pressure sensing unit senses the pressure of the touch and the control unit 180 may generate a control command corresponding to the pressure of the touch on the basis of the pressure of the touch. The content input in a touch manner may be characters or numbers, instructions in various modes, or a menu item that can be designated. Meanwhile, the pressure sensing unit may be formed in the form of a film having a pattern. The pressure sensing unit may be disposed between the cover window and the display panel, may be disposed on the back side of the display panel, may be disposed within the display panel, or may be disposed on a mid-frame or SUS disposed on the back side of the display panel.

According to the embodiment of the present invention, the pressure sensing unit included in the display 151 may include a pressure sensor and a controller receiving a signal output from the pressure sensor. The controller can transmit the signal output from the pressure sensor to the control unit 180. Alternatively, the controller can convert the signal output from the pressure sensor into a digital data and transmit the converted digital data to the control unit 180. The control unit 180 can determine the magnitude of the touch pressure on the basis of the signal or data provided from the controller.

According to the embodiment of the present invention, the pressure sensing unit included in the display 151 may include a touch recognition layer. The magnitude of the touch pressure can be sensed using a touch area recognized by the touch recognition layer. When the user presses lightly the display 151, the area to be touched may be relatively small, and when the user presses strongly, the area to be touched is relatively large. The touch input device 100 can calculate the touch pressure by using a relationship between the area to be touched and the pressure. Therefore, the touch input device 100 can recognize a touch gesture having a pressure higher than a predetermined pressure.

According to the embodiment of the present invention, the pressure sensing unit included in the display 151 may include a piezoelectric element. The piezoelectric element refers to a device that senses the pressure or causes deformation/vibration by using piezoelectric effect. When a particular solid material receives a mechanical stress (accurately, a mechanical force or pressure) and is deformed, polarization occurs within the solid material and electric charges are accumulated. The accumulated electric charges appear in the form of an electrical signal between both electrodes of the material, that is to say, voltage. This phenomenon is called piezoelectric effect, the solid material is called a piezoelectric material, and the accumulated charge is called piezoelectricity. The touch input device 100 may include a sensing unit (not shown) including a layer consisting of the piezoelectric material that can be driven by the piezoelectric effect. The sensing unit can detect applied mechanical energy (force or pressure) and electrical energy (voltage as a kind of an electrical signal) generated by the deformation due to the mechanical energy, and can sense the applied mechanical force or pressure based on the detected voltage.

According to the embodiment of the present invention, the pressure sensing unit included in the display 151 may include at least three pressures sensors. The at least three pressures sensors may be arranged in different layers in the display area 151 or arranged in a bezel area. When the user touches the display 151, the pressure sensor can sense the magnitude of the applied pressure. The magnitude of the pressure sensed by the pressure sensor may be inversely proportional to a distance between the pressure sensor and the touch point of the display 151. The magnitude of the pressure sensed by the pressure sensor may be proportional to the touch pressure. The touch input device 100 can calculate the touch point and the actual magnitude of the touch pressure by using the magnitude of the pressure sensed by each pressure sensor. Alternatively, the touch input device 100 can detect the touch point by including a touch input layer sensing the touch input. The touch input device 100 can also calculate the magnitude of the touch pressure of the touch point by using the detected touch point and the magnitude of the pressure sensed by each pressure sensor.

As such, the pressure sensing unit can be configured in various ways. The present invention is not limited to a specific pressure sensing method, and any method capable of directly or indirectly calculating the pressure of the touch point can be applied to the present invention.

The sound output section 152 outputs audio signals such as music, voice, etc., and may include a receiver, a speaker, a buzzer, and the like. The haptic module 153 generates various tactile effects that the user can feel. A typical example of the tactile effect generated by the haptic module 153 may be vibration. The light output section 154 outputs a signal notifying the occurrence of an event by using the light of the light source of the touch input device 100. An example of the event that occurs in the touch input device 100 may include message reception, call signal reception, missed call, alarm, schedule notification, email reception, information reception through an application, etc.

The memory 140 stores data supporting various functions of the touch input device 100. The memory 140 may store a plurality of application programs (or applications) executed by the touch input device 100, data for operation of the touch input device 100, and commands. At least some of these application programs may be downloaded from an external server via wireless communication. At least some of these application programs may exist in the touch input device 100 from the time of release of the touch input device 100 for the purpose of basic functions (e.g., call incoming and outgoing, message reception and transmission) of the touch input device 100. Meanwhile, the application program is stored in the memory 140, installed in the touch input device 100, and can be operated by the control unit 180 to perform the operation (or function) of the device.

The control unit 180 typically controls not only the operations related to the application programs, but also the overall operations of the touch input device 100. The control unit 180 processes signals, data, information, etc., input or output through the above-described components, or executes the application programs stored in the memory 140, thereby providing appropriate information or functions to the user. In addition, the control unit 180 can control at least some of the components in order to execute the application programs stored in the memory 140. Further, the control unit 180 can operate the at least two components included in the touch input device 100 in a combination thereof in order to execute the application programs.

The power supply 160 receives an electric power from external and internal power supplies under the control of the control unit 180, and supplies the electric power to each of the components included in the touch input device 100. The power supply 160 may include a battery. The battery may be an embedded battery or a replaceable battery.

At least some of the respective components can operate in cooperation with each other in order to implement the operation, control or control method of the device according to various embodiments to be described below. Also, the operation, control or control method of the device can be implemented in the device by executing at least one application program stored in the memory 140.

It has been described in the foregoing that the touch input device 100 is applied to a smartphone. In addition, when the touch input device 100 according to the embodiment of the present invention is applied to a device that is fixedly installed such as KIOSK, wired communication is applied instead of wireless communication, and the camera, microphone, etc., can be changed and applied in such a manner as to be omitted. That is, the components may be appropriately added or omitted depending on the nature of the touch input device 100 according to the embodiment.

Also, while Fig. 1 shows that the display 151 includes the touch sensor sensing the touch, some or all embodiments to be described below can be also applied to a device, for example, a laptop computer, in which the touch sensor is not included in the display 151 and a separate touch panel is provided for sensing the touch and touch pressure. The following description mainly describes the operation of the device including the touch screen, and can be also applied to the device including a separate touch panel.

Hereinafter, several embodiments will be described in detail with reference to the drawings.

In the description below, "B is controlled based on A" means that a value of B is controlled in consideration of a value of A. There are various methods for obtaining the value of B in consideration of the value of A. For example, the value of B is obtained by multiplying the value of A or a value derived from the value of A (e.g., differential value, integral value, etc.) by a predetermined value, the value of B corresponding to the value of A or a value derived from the value of A is stored in advance in the memory 140 in the form of a table and the value of B is obtained with reference to the table, the value of B is obtained by using a predetermined calculation formula calculating the value of B from the value of A, alternately, the value of A or a value derived from the value of A is compared in the program code with predetermined conditions and the value of B is assigned accordingly. The embodiment of the present invention is not limited to a specific method.

A threshold value (or a critical pressure) can be appropriately set according to devices, fields of application, etc., to which the present invention is applied. For example, the threshold value can be set as a pressure having a fixed magnitude. The magnitude can be appropriately set according to hardware characteristics, software characteristics, etc. Further, the user is also allowed to set the threshold value.

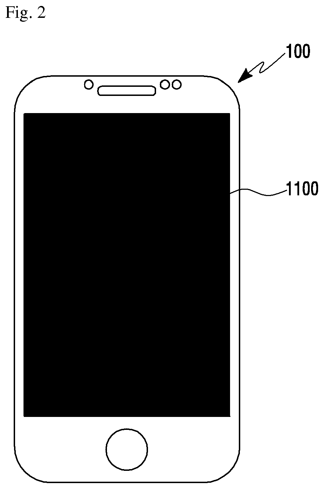

Fig. 2 is a front view of the touch input device 100 according to the embodiment of the present invention.

While the touch input device 100 according to the embodiment of the present invention is shown as a smartphone in Fig. 2, there is no limitation to this. For example, the touch input device100 may be a tablet PC, a laptop computer, etc.

The touch input device 100 according to the embodiment of the present invention includes a screen 1100. The screen 1100 is defined by the display 151 of the touch input device 100 shown in Fig. 1. When the screen 1100 is turned on, predetermined information is displayed. The screen 1100 can be turned on by a mechanical button of the touch input device 100. According to the displayed information, the screen 1100 can be switched to a clock screen, a lock screen, a background screen, etc.

A control method of the touch input device 100 according to the embodiment of the present invention is to turn on the turned off-screen 1100 of the touch input device 100 by user's touch applied to the surface of the cover window on the screen 1100, and then to provide predetermined information.

Prior to the detailed description, the screen 1100 of the touch input device 100 shown in Fig. 2 is in the turned-off state. Here, the state where the screen 1100 is turned off means a deactivated state where no information is displayed on the screen 1100. The state where the screen 1100 is turned off is distinguished from the state where the screen 1100 is powered off.

The control method of the touch input device 100 according to the embodiment of the present invention includes a sensing step of sensing the magnitude of the pressure of the touch input to the surface of the touch input device 100 in the state where the screen 1100 of the touch input device 100 is turned off, an information displaying step of displaying predetermined information on the screen 1100 when the sensed pressure magnitude is equal to or greater than a threshold value, and a screen control step of controlling the luminosity of the screen 1100 on the basis of the sensed pressure magnitude in the state where the information is displayed on the screen 1100.

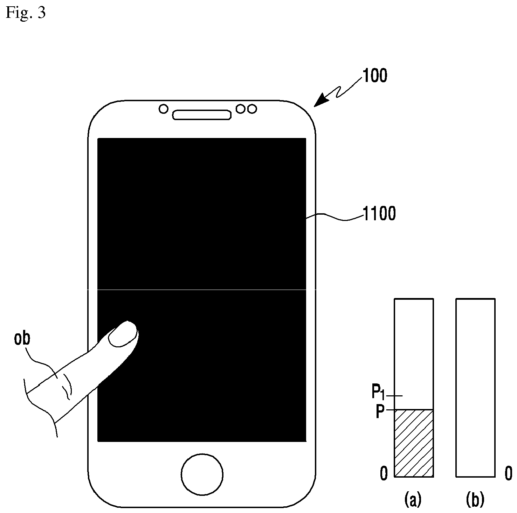

The control method of the touch input device 100 according to the embodiment of the present invention will be described in detail with reference to Figs. 3 to 6.

Figs. 3 to 6 are views for describing the control method of the touch input device 100 according to the embodiment of the present invention.

In Figs. 3 to 6a, a bar relatively showing the magnitude of the pressure sensed by the touch input device 100 is shown in (a), and a bar relatively showing the luminosity of the screen 1100 is shown in (b).

Fig. 3 assumes that the user's finger "ob" is pressing the surface of the touch input device 100 on the screen 1100 while the screen 1100 of the touch input device 100 is maintained in the turned-off state. In this situation, Fig. 3 shows the pressure magnitude P sensed by the touch input device 100 is less than a threshold value P1.

Referring to Fig. 3, since the touch magnitude P sensed by the touch input device 100 is less than the threshold value P1 predetermined in the touch input device 100, the touch input device 100 maintains the screen 1100 in the turned-off state.

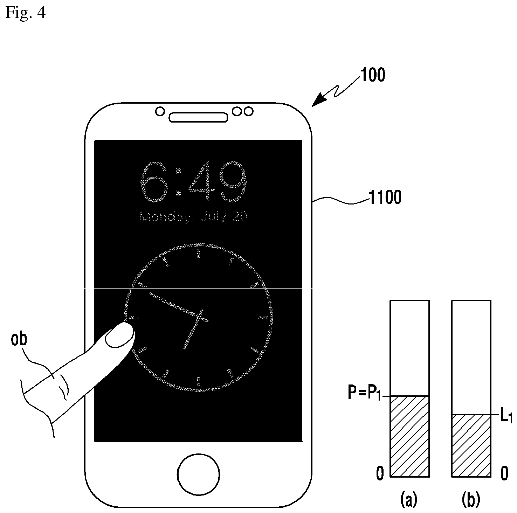

Fig. 4 assumes that the user's finger "ob" is pressing more strongly the surface of the touch input device 100 on the screen 1100 while the state shown in Fig. 3 is maintained. In this situation, Fig. 4 shows that the pressure magnitude P sensed by the touch input device 100 is equal to the threshold value P1.

Referring to Fig. 4, since the pressure magnitude P sensed by the touch input device 100 is the same as the threshold value P1 predetermined in the touch input device 100, the touch input device 100 turns on the screen 1100 at a predetermined first luminosity L1 to display a clock screen that is the predetermined information. Here, the threshold value P1 corresponds to the first luminosity L1.

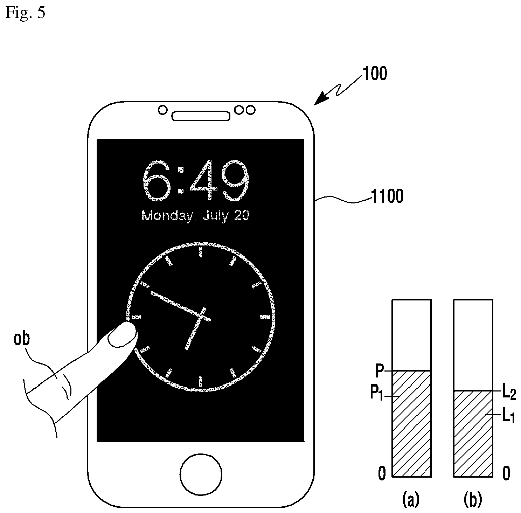

Fig. 5 assumes the user's finger "ob" is pressing more strongly the surface of the touch input device 100 on the screen 1100 while the state shown in Fig. 4 is maintained. In this situation, Fig. 5 shows that the pressure magnitude P sensed by the touch input device 100 exceeds the threshold value P1.

Referring to Fig. 5, since the pressure magnitude P sensed by the touch input device 100 exceeds the threshold value P1 predetermined in the touch input device 100, the touch input device 100 turns on the screen 1100 at a second luminosity L2 relatively greater than the first luminosity L1 to display more luminously the clock screen that is the predetermined information than the clock screen shown in Fig. 4. Here, the sensed pressure magnitude P corresponds to the second luminosity L2.

Here, from the moment when the pressure magnitude P sensed by the touch input device 100 exceeds the threshold value P1 to the moment shown in Fig. 5, the touch input device 100 can gradually increase the luminosity of the screen 1100 from the first luminosity L1 to the second luminosity L2. That is, the touch input device 100 can continuously control the luminosity of the screen 1100 in correspondence to the sensed pressure magnitude P.

Also, from the moment when the pressure magnitude P sensed by the touch input device 100 exceeds the threshold value P1 until just before the moment shown in Fig. 5, the touch input device 100 can maintain the luminosity of the screen 1100 at the first luminosity L1. At the moment shown in Fig. 5, the touch input device 100 can control the luminosity of the screen 1100 to the second luminosity L2. That is, the touch input device 100 can discretely control the luminosity of the screen 1100 in correspondence to the sensed pressure magnitude P.

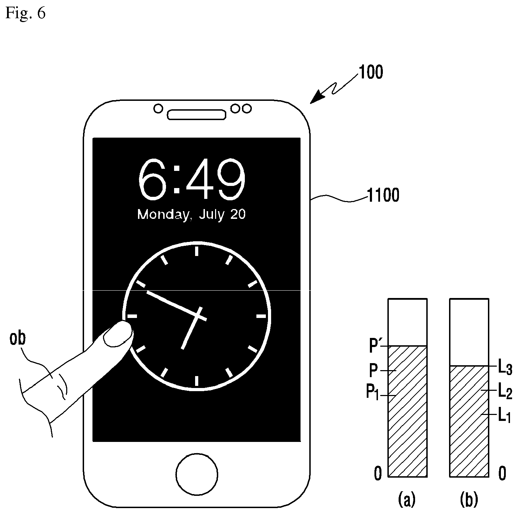

Fig. 6 assumes the user's finger "ob" is pressing more strongly the surface of the touch input device 100 on the screen 1100 while the state shown in Fig. 5 is maintained. In this situation, Fig. 6 shows that the pressure magnitude P' sensed by the touch input device 100 exceeds the pressure magnitude P shown in Fig. 5.

Referring to Fig. 6, since the pressure magnitude P' sensed by the touch input device 100 exceeds the pressure magnitude P and the threshold value P1 predetermined in the touch input device 100, the touch input device 100 turns on the screen 1100 at a third luminosity L3 relatively greater than the second luminosity L2 to display more luminously the clock screen that is the predetermined information than the clock screen shown in Fig. 5. Here, the sensed pressure magnitude P' corresponds to the third luminosity L3.

Here, from the moment when the pressure magnitude P' sensed by the touch input device 100 exceeds the pressure magnitude P to the moment shown in Fig. 6, the touch input device 100 can gradually increase the luminosity of the screen 1100 from the second luminosity L2 to the third luminosity L3. That is, the touch input device 100 can continuously control the luminosity of the screen 1100 in correspondence to the sensed pressure magnitude P'.

Also, from the moment when the pressure magnitude P' sensed by the touch input device 100 exceeds the pressure magnitude P until just before the moment shown in Fig. 6, the touch input device 100 can maintain the luminosity of the screen 1100 at the second luminosity L2. At the moment shown in Fig. 6, the touch input device 100 can control the luminosity of the screen 1100 to the third luminosity L3. That is, the touch input device 100 can discretely control the luminosity of the screen 1100 in correspondence to the sensed pressure magnitude P'.

As shown in Figs. 4 to 6, when the pressure magnitude sensed by the touch input device 100 is equal to or greater than the threshold value PI, the touch input device 100 displays the clock screen on the screen 1100, and controls the luminosity of the screen 1100 in correspondence to the sensed pressure magnitude.

In each of the situations shown in Figs. 4 to 6, when the user's finger "ob" is separated from the surface of the touch input device 100, the touch input device 100 can control in such a way that the screen 1100 is, as shown in Fig. 3, turned off. Here, the fact that the user's finger "ob" is separated from the surface of the touch input device 100 means that the touch position is not sensed by the touch input device 100.

Meanwhile, in each of the situations shown in Figs. 4 to 6, when the user's finger "ob" is separated from the surface of the touch input device 100, after a predetermined period of time, the touch input device 100 can control in such a way that the screen 1100 is, as shown in Fig. 3, turned off.

Here, the touch input device 100 may determine the predetermined period of time on the basis of the pressure magnitude sensed immediately before a "release operation time period". The release operation time period refers to a time period from a certain time point when the user's finger "ob" presses the surface of the touch input device 100 to a time point when the user's finger "ob" is separated from the surface of the touch input device 100. When, with respect to a certain time point, an aspect that the pressure magnitude is reduced before the certain time point is different from an aspect that the pressure magnitude is reduced after the certain time point, the touch input device 100 may determine a time period from the certain time period to a time point when the touch position is not sensed as the release operation time period. Alternatively, the touch input device 100 may determine a time period from a time point when the pressure magnitude is rapidly reduced to a time point when the touch position is not sensed as the release operation time period.

For example, the touch input device 100 can control such that when the pressure magnitude sensed immediately before the release operation time period is P shown in Fig. 5, the screen 1100 is turned off after a first time period and when the pressure magnitude sensed immediately before the release operation time period is P' shown in Fig. 6, the screen 1100 is turned off after a second time period longer than the first time period.

Also, in each of the situations shown in Figs. 4 to 6, until the moment when the user's finger "ob" is separated from the surface of the touch input device 100, the touch input device 100 can control such that the luminosity of the screen 1100 is reduced.

Meanwhile, in the situation shown in Fig. 6, even after the pressure magnitude sensed by the touch input device 100 gradually increases to reach the maximum pressure value that the touch input device 100 can sense, the touch input device 100 can increase the luminosity of the screen 1100. The user is allowed to press the surface of the touch input device 100 at a pressure having a magnitude equal to or greater than the maximum pressure value that the touch input device 100 can measure. The fact that the user presses the surface of the touch input device 100 at a pressure having a magnitude equal to or greater than the maximum pressure value may mean that the user intends to display the screen 1100 more luminously. Therefore, the touch input device 100 can measure a time period for which the maximum pressure value is maintained and control the luminosity of the screen 1100 in correspondence to the measured time period. For example, as the time period for which the maximum pressure value is maintained increases, the luminosity of the screen 1100 can be further increased.

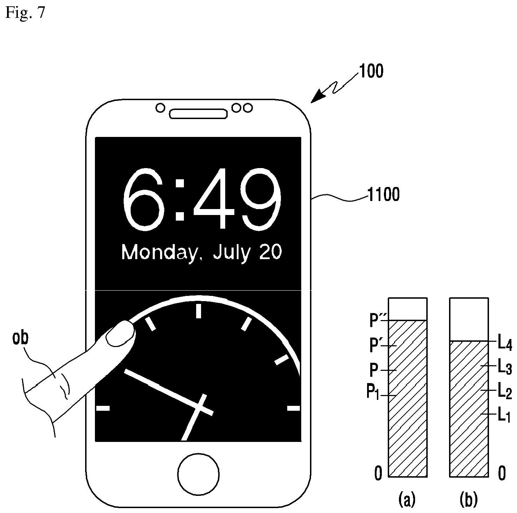

Meanwhile, the touch input device 100 can control the size of information as well as the luminosity of the screen 1100 on the basis of the sensed pressure magnitude. This will be described in detail with reference to Fig. 7.

Fig. 7 is a view for describing a control method of the touch input device 100 according to another embodiment of the present invention.

Fig. 7 assumes the user's finger "ob" is pressing more strongly the surface of the touch input device 100 on the screen 1100 while the state shown in Fig. 6 is maintained. In this situation, Fig. 7 shows that the pressure magnitude P" sensed by the touch input device 100 exceeds the pressure magnitude P' shown in Fig. 6.

Referring to Fig. 7, since the pressure magnitude P" sensed by the touch input device 100 exceeds the pressure magnitudes P and P' and the threshold value P1 predetermined in the touch input device 100, the touch input device 100 turns on the screen 1100 at a fourth luminosity L4 relatively greater than the third luminosity L3 to display more luminously the clock screen that is the predetermined information than the clock screen shown in Fig. 6 and the clock screen can be enlarged. Here, the sensed pressure magnitude P" corresponds to the fourth luminosity L4.

In addition, in the embodiment shown in Fig. 7, the touch input device 100 can enlarge only the clock screen without controlling the luminosity of the screen 1100. That is, when the screen 1100 of the embodiment shown in Fig. 6 is displayed at the maximum luminosity, only the clock screen can be enlarged in correspondence to an additional increase of the pressure. In contrast to this, only the clock screen can be reduced.

Meanwhile, in the foregoing situations shown in Figs. 4 to 6, when the magnitude of the pressure sensed by the touch input device 100 increases, the touch input device 100, in correspondence to the increased magnitude of the pressure, can not only control the luminosity of the screen 1100 but also enlarge the clock screen as shown in Fig. 7. In contrast to this, the touch input device 100 can not only control the luminosity of the screen 1100 but also reduce the clock screen.

Further, in the foregoing situations shown in Figs. 4 to 6, when the magnitude of the pressure sensed by the touch input device 100 increases, the touch input device 100, in correspondence to the increased magnitude of the pressure, may enlarge the clock screen as shown in Fig. 7 without controlling the luminosity of the screen 1100.

The foregoing embodiments shown in Figs. 4 to 7 show a one touch situation in which one finger "ob" of the user is input to the touch input device 100. However, the embodiment is not limited to this and can be applied to a multi-touch where two or more fingers of the user are input to the touch input device 100.

For example, in the situation shown in Fig. 4, when user's two fingers are input to the touch input device 100, the touch input device 100 senses the pressure magnitude of each touch of the multi-touch that means two or more touches. Then, the touch input device 100 turns on the turned-off screen 1100 on the basis of the pressure magnitude of the multi-touch and displays the clock screen that is the predetermined information.

Here, when the largest magnitude among the magnitudes of the pressures of the multi-touch is equal to the threshold value P1, the touch input device 100 can display the clock information on the screen 1100 as shown in Fig. 4. When the largest magnitude exceeds the threshold value P1, the touch input device 100 can control the luminosity of the screen 1100 as shown in Fig. 5 or 6, in correspondence to the magnitude that exceeds the threshold value P1.

Also, when a pressure magnitude obtained by summing the pressure magnitudes of the multi-touch pressure is equal to the threshold value P1, the touch input device 100 can display the clock information on the screen 1100 as shown in Fig. 4. When the pressure magnitude obtained by summing the pressure magnitudes of the multi-touch pressure exceeds the threshold value P1, the touch input device 100 can control the luminosity of the screen 1100 as shown in Fig. 5 or 6, in correspondence to the pressure magnitude that exceeds the threshold value P1.

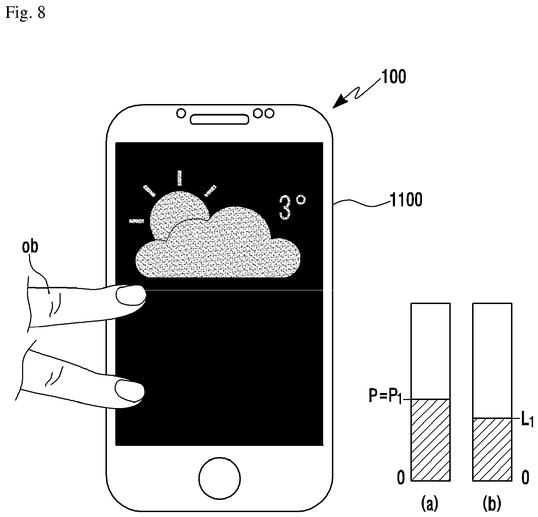

Here, the touch input device 100 turns on the turned-off screen 1100 on the basis of the pressure magnitude of the multi-touch and displays the clock screen that is the predetermined information. However, the touch input device 100 is not limited to this. The touch input device 100 can display other information other than the clock screen. For example, in the case of the multi-touch, the touch input device 100 may, as shown in Fig. 8, display weather information other than the clock information on the screen 1100 on the basis of the pressure magnitude of the input multi-touch. Further, as shown in Figs. 5 to 6, the touch input device 100 can control the luminosity of the screen 1100 displaying the weather information in correspondence to the pressure magnitude of the input multi-touch.

The foregoing embodiments shown in Figs. 4 to 7 do not consider the position of the user's finger "ob" which touches the surface of the touch input device 100. That is, the embodiments shown in Figs. 4 to 7 are performed even if the user presses any position on the surface of the touch input device 100. However, this method has a problem in that the user's finger "ob" may hide the information displayed on the screen 1100.

Accordingly, the touch input device 100 can control the information displayed on the screen 1100 in consideration of the sensed touch position. For example, the touch input device 100 senses a touch position of the user's finger "ob". If the pressure magnitude sensed at the touch position is equal to or greater than the threshold value, the touch input device 100 turns on the screen 1100 and displays the predetermined information such that the information to be displayed and the touch position do not overlap each other.

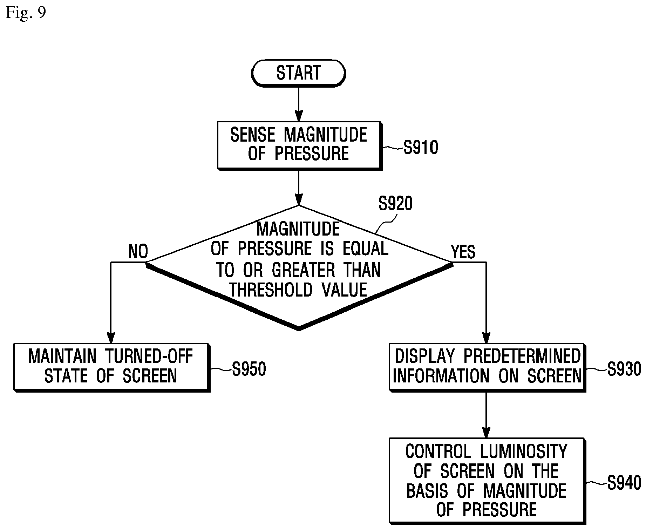

Fig. 9 is a flowchart for describing the control method of the touch input device 100 according to the embodiment of the present invention.

Referring to Fig. 9, the control method of the touch input device 100 according to the embodiment of the present invention includes a sensing step S910, a determination step S920, an information displaying step S930, and a screen control step S940.

The sensing step S910 is to sense the magnitude of the pressure of the touch input to the surface of the touch input device 100 in the state where the screen 1100 of the touch input device 100 is turned off.

The sensing step S910 may be performed by the display 151 and the control unit 180 of the touch input device 100 shown in Fig. 1.

The pressure sensing unit included in the display 151 may sense the pressure of the touch input to the surface of the touch input device 100 and output a predetermined electrical signal. The control unit 180 may calculate the magnitude of the pressure on the basis of the electrical signal output from the pressure sensing unit.

The pressure sensing unit included in the display 151 may include the pressure sensor and the controller. The pressure sensor can sense the pressure of the touch input to the surface of the touch input device 100 and output a predetermined signal. The controller can process the electrical signal output from the pressure sensor and output predetermined data, and the control unit 180 can calculate the magnitude of the pressure on the basis of the data output from the controller.

The pressure sensor may be disposed on the display panel included in the display 151. The display panel is bent by the touch input to the surface of the touch input device 100, and the electrical signal that changes according to the bending of the display panel is output. For example, the pressure sensor may be a capacitive electrode or may be a strain gauge.

The determination step 920 is to determine whether the pressure magnitude sensed in the sensing step S910 is equal to or greater than the threshold value. This determination can be performed by the control unit 180 shown in Fig. 1. The control unit 180 can perform the determination by comparing the predetermined stored threshold value with the sensed pressure magnitude. Here, the threshold value may be stored in the memory 140 shown in Fig. 1. The threshold values stored in the memory 140 may be modified by the user or manufacturers.

The information displaying step S930 is to display the predetermined information on the screen 1100 when the sensed pressure magnitude is equal to or greater than the threshold value. This information display can be performed by the control unit 180 and the display 151. The control unit 180 can control the display 151 to display the predetermined information on the display 151 when the sensed pressure magnitude reaches the threshold value. The predetermined information may be the clock screen shown in Fig. 4 or the weather screen shown in Fig. 8. Since the predetermined information includes real-time information, the predetermined information may be information provided through the wireless communication unit 110 shown in Fig. 1.

The screen control step S940 is to control the luminosity of the screen 1100 on the basis of the sensed pressure magnitude, in the state where the information is displayed on the screen 1100.

The screen control step S940 may be performed as shown in Figs. 4 to 6. Accordingly, the various embodiments described in Figs. 4 to 6 can be controlled in the screen control step S940 by the control unit 180.

The control of the screen luminosity may be performed by the control unit 180 and the display 151. When the sensed pressure magnitude exceeds the threshold value, the control unit 180 controls the screen 1100 to be displayed at the luminosity corresponding to the sensed pressure magnitude. Here, information on the luminosity of the screen and the magnitude of the pressure may be stored in the memory 140 shown in Fig. 1 in the form of a table, and the luminosity according to the magnitude of the pressure may be determined by a specific formula stored or set in advance.

Referring to Fig. 9, when the sensed pressure magnitude is less than the threshold value in the determination step S920, the control unit 180 can control the turned-off screen 1100 to be maintained as it is.

Though not shown in a separate drawing, not only the type but position of the touch input to the surface of the touch input device 100 can be sensed together in in the sensing step S910.

In the sensing step S910, the one touch and the multi-touch can be sensed as the touch type. In the case of the multi-touch, information different from that of the one touch can be displayed as shown in Fig. 8 in the information displaying step S930.

In the sensing step S910, the touch position can be sensed. In consideration of the touch position sensed in the information displaying step S930, information to be displayed can be displayed on the screen 1100 in such a way as not to overlap the touch position.

Though not shown in a separate drawing, not only the luminosity of the screen 1100 but also the size of information displayed on the screen 1100 can be controlled in the screen control step S940. For example, the information displayed on the screen 1100 can be enlarged or reduced as shown in Fig. 7 on the basis of the sensed pressure magnitude.

The features, structures and effects and the like described in the embodiments are included in an embodiment of the present invention and are not necessarily limited to one embodiment. Furthermore, the features, structures, effects and the like provided in each embodiment can be combined or modified in other embodiments by those skilled in the art to which the embodiments belong. Therefore, contents related to the combination and modification should be construed to be included in the scope of the present invention.

Although embodiments of the present invention were described above, these are just examples and do not limit the present invention. Further, the present invention may be changed and modified in various ways, without departing from the essential features of the present invention, by those skilled in the art. For example, the components described in detail in the embodiments of the present invention may be modified. Further, differences due to the modification and application should be construed as being included in the scope and spirit of the present invention, which is described in the accompanying claims.

## Claims

1. A control method of a touch input device capable of sensing a pressure of a touch, the method comprising:
a sensing step of sensing a magnitude of the pressure of the touch input to a surface of the touch input device in a state where a screen of the touch input device is turned off;
an information displaying step of displaying predetermined information on the screen when the sensed magnitude of the pressure is equal to or greater than a threshold value; and
a screen control step of controlling a luminosity of the screen or/and a size of the information on the basis of the sensed magnitude of the pressure in a state where the information is displayed on the screen.

2. The control method of claim 1, wherein, in the screen control step, when the sensed magnitude of the pressure is equal to or greater than the threshold value, the luminosity of the screen or/and the side of the information is controlled.

3. The control method of claim 1 or 2, wherein, in the screen control step, after the sensed magnitude of the pressure reaches a maximum pressure value, the luminosity of the screen is increased on the basis of a time period for which the maximum pressure value is maintained.

4. The control method of any one of claims 1 to 3, wherein, further comprising, in the state where the information is displayed on the screen, turning off the screen when a position of the touch is not sensed.

5. The control method of any one of claims 1 to 3, wherein, further comprising, in the state where the information is displayed on the screen, turning off the screen after a predetermined period of time when a position of the touch is not sensed.

6. The control method of claim 5, wherein the predetermined period of time is determined based on the pressure magnitude sensed immediately before a release operation time period.

7. The control method of any one of claims 1 to 6, wherein, in the sensing step, a type of the touch is sensed and when the touch is a multi-touch, a magnitude of a pressure of the multi-touch is sensed, and wherein, in the information displaying step, when a largest magnitude among the magnitudes of the pressures of the multi-touch or a value obtained by summing the magnitudes of the pressures of the multi-touch is equal to or greater than the threshold value, the information or information different from the information is displayed on the screen.

8. The control method of any one of claims 1 to 7, wherein, in the sensing step, a position of the touch is sensed, and wherein, in the information displaying step, the information to be displayed is displayed on the screen in such a way as not to overlap the position of the touch.

9. A touch input device capable of sensing a pressure of a touch, the touch input device comprising:
a display;
a pressure sensing unit which outputs a signal corresponding to the pressure of the touch input to a surface of the display, in a state where a screen of the display is turned off; and
a control unit which calculates a magnitude of the pressure of the touch on the basis of the signal output from the pressure sensing unit, displays predetermined information on the screen when the magnitude of the pressure is equal to or greater than a threshold value, and controls a luminosity of the screen or/and a size of the information on the basis of the magnitude of the pressure.

10. The touch input device of claim 9, wherein the control unit controls the luminosity of the screen or/and the size of the information when the sensed magnitude of the pressure exceeds the threshold value.

11. The touch input device of claim 9 or 10, wherein, after the sensed magnitude of the pressure reaches a maximum pressure value, the control unit increases the luminosity of the screen on the basis of a time period for which the maximum pressure value is maintained.

12. The touch input device of any one of claims 9 to 11, wherein, in the state where the information is displayed on the screen, the control unit turns off the screen when a position of the touch is not sensed.

13. The touch input device of any one of claims 9 to 11, wherein, in the state where the information is displayed on the screen, the control unit turns off the screen after a predetermined period of time when a position of the touch is not sensed.

14. The touch input device of claim 13, wherein the predetermined period of time is determined based on the pressure magnitude sensed immediately before a release operation time period.

15. The touch input device of any one of claims 9 to 14, wherein the control unit senses a type of the touch, wherein, when the touch is a multi-touch, the control unit senses a magnitude of a pressure of the multi-touch, and wherein, when a largest magnitude among the magnitudes of the pressures of the multi-touch or a value obtained by summing the magnitudes of the pressures of the multi-touch is equal to or greater than the threshold value, the control unit displays the information or information different from the information on the screen, and/or wherein the control unit senses a position of the touch, and wherein the control unit displays the information to be displayed on the screen in such a way as not to overlap the position of the touch.
